# EUROPEAN PATENT APPLICATION

(11) **EP 0 913 800 A1**
(43) Date of publication of application: **06.05.1999**
(21) Application number: 98308863.4
(22) Date of filing: 29.10.1998
(51) Int. Cl.: G08B 15/00

(54) **Monitoring system**

(30) Priority: 29.10.1997 GB 9722721
(71) Applicant: Endusis Limited, Moor Row, Cumbria CA24 3JZ (GB)
(72) Inventor: Holloway, Trevor, Kirkby Stephen, Cumbria CA17 4EU (GB)
(74) Representative: Pacitti, Pierpaolo A.M.E.

(57) **Abstract**

A local circuit (14) cooperates with a video camera (12) and a trigger signal source 10 such as an existing alarm trigger in an intruder alarm system. A trigger signal causes the local circuit (14) to sample the video camera (12) output and forward one or more images together with date and time information via a public communications channel (16) to a data warehouse (40) where the data is stored in raw, as-received form. The stored data is used to reconstitute one or more images only if necessary, for example if an actual intrusion has occurred.

## Description

This invention relates to a remote monitoring system which is particularly, but not exclusively, useful in domestic and small business premises.

Intruder alarms are well known and in common use which make use of sensors such as infra-red motion detectors and pressure switches to trigger an alarm indication. The alarm indication may be simply the sounding of a local siren or other audible alarm, or may consist of the transmission of a coded signal to a central control room. Intruder alarms of this nature suffer a high rate of false alarms and accordingly tend to be ignored or to be investigated only after a significant lapse of time. The usefulness of such systems is accordingly limited, and they do not provide any form of evidence useful in identifying or prosecuting intruders.

It is also known to have remote monitoring systems in which a trigger such as an alarm indication causes video signals from one or more cameras to be transmitted to a central control station where they may be recorded. Such systems are however expensive and require the use of dedicated broad bandwidth communication channels.

There is accordingly a need for a relatively simple, low cost system which can provide visual evidence and which is capable of being added in a simple manner to existing systems such as intruder alarm systems.

The present invention, from one aspect, provides a monitoring system comprising a control unit which can be connected to one or more video cameras and which is responsive to a trigger signal to supply image data derived from the video camera or cameras via a public communications channel to a central location at which the image data is stored in raw form together with a time stamp record for a given period of time during which one or more images may be reconstructed only if required.

Preferably, the control unit includes memory means in which the video signal output of the video camera or cameras may be stored temporarily for immediate transmission at a relatively low data transfer rate, or for subsequent transmission at the most rapid transmission rate available.

The control unit may also include means for signal compression of the video information in a manner known per se.

Preferably, the video data is transmitted to the central location by means of the Internet, and the central location is an Internet service provider.

The control unit together with any necessary modem or networking device is preferably provided in the form of a module for connection to an existing intruder alarm system, whereby the trigger signal is provided by the existing alarm system.

From another aspect, the present invention provides a method of producing visual evidence relating to an event occurrence in premises provided with an alarm system for such events, the method comprising: providing one or more video signals of selected parts of the premises; in response to activation of the alarm system, forwarding image data derived from said video signals via a public communications channel to a central location; storing the image data as received at said central location together with time stamp data for a predetermined period of time; and, in response to a request from an authorised person within said predetermined period of time, using said stored image data to reconstruct one or more images of the location and supplying the image or images to a third party such as a law enforcement agency, a client, or a security manager.

The method preferably includes storing the image data locally at said premises temporarily, and forwarding the data at the best available data transfer rate via the public communications channel.

Preferably also, the public communications channel is the Internet, and the central location is an Internet service provider.

An embodiment of the present invention will now be described, by way of example only, with reference to the accompanying drawings, in which:-
Figure 1 is a schematic overview of the system;
Figure 2 is a block diagram illustrating in more detail the local installation forming part of Figure 1;
Figure 3 shows one implementation of circuitry for the installation of Figure 2; and
Figure 4 is a block diagram illustrating a preferred sequence of events.

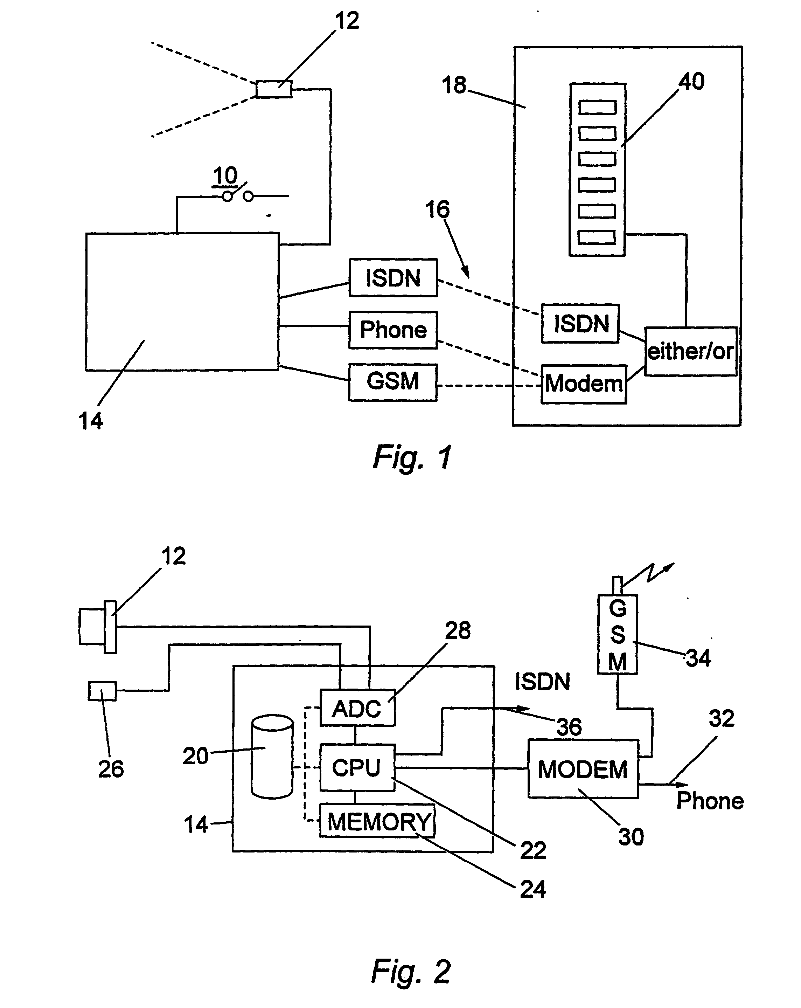

Referring to Figure 1, the premises, such as a domestic dwelling, to be protected are provided with some means of detecting intrusion indicated as an intrusion switch 10. This will normally be provided by an existing intruder alarm system of conventional form and using well known types of sensor. One or more video cameras such as the camera 12 are positioned to survey selected parts of the premises. A control unit 14 is connected to receive intrusion signals from the intrusion switch 10 and video signals from the camera 12. The control unit 14 is connected by a public communications channel indicated at 16 to an Internet service provider 18. The communications channel may be analog (for example a telephone line), or digital (for example an ISDN connection or a GSM cellular communications system). Any given control unit 14 may be provided with only one of these, or may be provided with more than one with selection being made at the time of use as discussed below.

In the event of an intrusion occurring, actuation of the intrusion switch 10 causes the control unit 14 to sample, store and process video information from the camera 12 and forward it at a rate suitable to the chosen communications channel 16 to the Internet service provider 18 until further action is requested.

A suitable form of sampling is to use one video frame or image per time interval chosen in a range of one-half to 5 seconds. The processing in the control unit 14 includes attaching a date and time stamp to each sampled image. Software for achieving this is known in the art; one suitable system is a "watermarking system available from Signum Technologies of Cheltenham, England, which encrypts date and time in formation by making small changes to the values of preselected pixels.

Referring to Figure 2, in one example the control unit 14 comprises an internal power supply 20 and a central processor unit (CPU) 22 and associated memory 24 which may suitably be in the form of a SIMM card or a RAM chip. Video signals from the camera 12 and audio or other signals from an optional microphone 26 or other capture device are passed to the CPU 22 via an analogue to digital converter 28, where such A-D conversion is required. Output may be via a modem 30 to a telephone line or other analog channel 32, or via a network card 35 using an ISDN connection or other wholly digital communications channel 36.

In the preferred form of the invention, the CPU 22 is a dedicated microprocessor which is arranged to receive data from the capture device or devices, sample the data, process the data as required (which may be part-image filtering or the like), effect data compression by known techniques, and transfer the resulting data to the modem 30 or to the network card 35.

In a preferred form, the data is organised into data files each containing one sampling and identifying the location, date and time of the image. CPU software compares each data file with the previous data file, transmitting only those with changes within limits set by software. Where no changes are recorded over a predetermined time period, the software shuts down the system unless overridden by a detection device. The software may also include data encryption to prevent fraudulent supply of data.

A communications line switch may be provided using a BUS architecture when more than one data transmission method is available. The line switch first tests and uses the most appropriate method, then the next most appropriate method if the first is not or becomes unavailable, and so on.

At the Internet service provider 18 (Fig. 1) the data is received by means appropriate to the communications channel used and passed to an ISP server 40. The ISP server 40 in effect runs an intranet system with one way transmission of data from the client, and operates firewall software to prevent unauthorised access and to allow only one type of transaction (access control) for registered clients only. This is in effect a data warehousing operation.

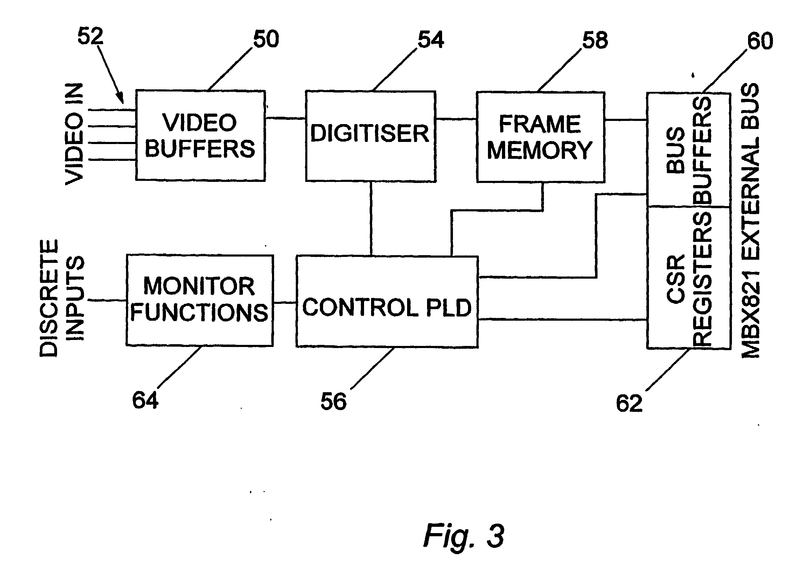

Figure 3 shows more detail of one example of a practical implementation of part of Figure 2.

In Figure 3, a video buffer circuit 50 uses video buffer amplifiers to give a pass-through capability on four video lines 52. Each input from the lines 52 passes through an anti-aliasing filter and is then buffered by an LT1254 video op-amp.

The outputs from the buffer circuit op-amps are capacitively coupled to a digitiser 54 which is suitably a Brooktree Bt829A chip, which has a 4-input video multiplexer controlled by an internal register which allows any one of the four sources to be selected. Each pixel is digitised as an 8-bit byte representing brightness.

Control signals are passed to and from the digitiser 54 by a control PLD circuit 56, which may be for example the isp LSI 2064 by Lattice Semiconductor. This chip provides valid address and I/O address decoding for the various registers, it provides control functions for the external bus circuit (to be described) and it provides handshaking control for the digitiser 54. In addition, it controls the monitor and I/O functions.

Memory is provided by a memory chip 58, which may suitably be the OKI Semiconductors MSM518221, which contains 2 Mb of DRAM organised as a 256 kb FIFO with 30ns access times.

Bus buffers 60 and 62 provide data and address buffering to and from the MBX821 external bus. Suitable devices are, for example, octal devices from the LCX range by Quality Semiconductor.

A monitor circuit 64 is provided for connection to alarm or trigger inputs, typically up to three, and may also provide monitoring of the installation as an aid to debugging, for example by means of LEDs controlled by the control PLD circuit 56.

A feature of the present invention is that the image information is stored in the ISP server 40 (Fig. 1) in raw form as received, and is discarded after a preselected time.

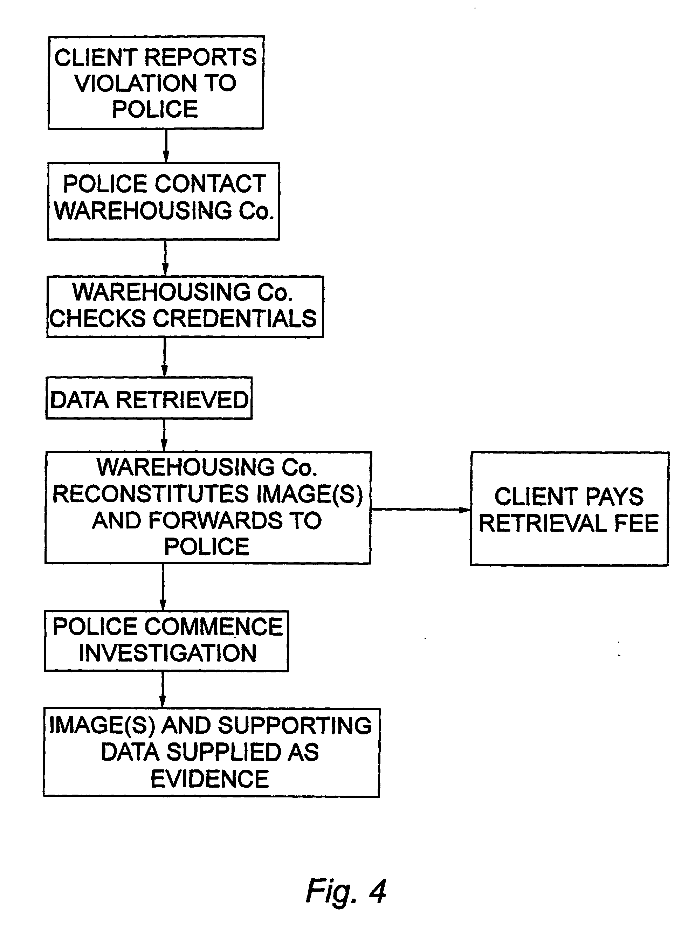

Referring to Figure 4, if there has been a real violation of the premises, the client reports this to the police who may then contact the ISP or a separate data warehousing company to request data. It is envisaged that the ISP will not be involved in this process but will simply store raw data. The separate data warehousing company will periodically copy the raw data from the ISP and store it. The data warehousing company, after checking the credentials of the requester, retrieves the data from its store and reconstitutes one or more sampled images from the location together with information identifying location, date and time and forwards this information to the police to assist in their investigation and to provide evidentiary material if required. The request, instead of being made by the police, may be acceptable from another law enforcement agency, the client, or a security manager. It is anticipated that the client would pay a periodic subscription for access to and use of the system plus an additional fee for any retrieval required.

Although described above with particular reference to a domestic intruder alarm system, the invention may be used in conjunction with other triggers. It could, for example, be triggered by a smoke detector or a temperature sensor, and the images of interest may be of plant or machinery rather than persons. It could be a simple alarm button.

The trigger signal could also be generated by the CPU examining the video signal itself to detect significant changes in the image representing unexpected movement, or lack of anticipated movement.

The system may of course be connected to more than one such trigger source, and respond to actuation of any one.

The invention thus provides a low cost and convenient system which may readily be added to existing intruder alarm systems and in which the cost effects of false alarms are minimised.

Modifications and improvements may be made to the foregoing within the scope of the present invention.

## Claims

1. An monitoring system comprising a control unit which can be connected to one or more video cameras and which is responsive to a trigger signal to supply image data derived from the video camera or cameras via a public communications channel to a central location at which the image data is stored in raw form together with a time stamp record for a given period of time during which one or more images may be reconstructed only if required.

2. A system according to claim 1, in which the control unit includes memory means in which the video signal output of the video camera or cameras may be stored temporarily for immediate transmission at a relatively low data transfer rate, or for subsequent transmission at the most rapid transmission rate available.

3. A system according to claim 2, in which the control unit also includes means for signal compression of the video information in a manner known per se.

4. A system according to any preceding claim, in which the video data is transmitted to the central location by means of the Internet, and the central location is an Internet service provider.

5. A system according to any preceding claim, in which the control unit together with any necessary modem or networking device is provided in the form of a module for connection to an existing intruder alarm system, whereby the trigger signal is provided by the existing alarm system.

6. A method of producing visual evidence relating to an event occurrence in premises provided with an alarm system for such events, the method comprising:
providing one or more video signals of selected parts of the premises; in response to activation of the alarm system, forwarding image data derived from said video signals via a public communications channel to a central location; storing the image data as received at said central location together with time stamp data for a predetermined period of time; and, in response to a request from an authorised person within said predetermined period of time, using said stored image data to reconstruct one or more images of the location and supplying the image or images to a third party such as a law enforcement agency, a client, or a security manager.

7. A method according to claim 6, which includes storing the image data locally at said premises temporarily, and forwarding the data at the best available data transfer rate via the public communications channel.

8. A method according to claim 6 or claim 7, in which the public communications channel is the Internet, and the central location is an Internet service provider.
